# EUROPEAN PATENT APPLICATION

(11) **EP 3 591 556 A1**
(43) Date of publication of application: **08.01.2020**
(21) Application number: 18212081.6
(22) Date of filing: 12.12.2018
(51) Int. Cl.: G06F 21/55, G06F 21/57

(54) **AUTOMATED SECURITY ASSESSMENT OF INFORMATION SYSTEMS**

(30) Priority: 07.07.2018 US 201816029552
(71) Applicant: 1830291 Ontario Inc., Milton, Ontario L9T 6K3 (CA)
(72) Inventor: DHILLON, Amandeep, Mississauga, Ontario L5M 0B5 (CA)
(74) Representative: Dallimore, Geoffrey Robert

(57) **Abstract**

Disclosed is a system and method for managing security vulnerabilities and threats in at least one monitored system using a system manager such as SAP Solution Manager. The proposed method includes storage of security-related data associated with monitored systems, reading and loading of threat and vulnerability data to custom data tables for storage, continuously monitoring of security events, threats and vulnerabilities in monitored systems, extracting security related data from the monitored systems, customizing settings for security relevant configuration stores, performing security checks for monitored systems, monitoring and visualizing security related alerts, security related patch, vulnerability data, and threat data for monitored systems, and investigating and managing security-related alerts in the system manager.

## Description

### FIELD OF THE INVENTION

The present application relates to automated security assessment of information systems using add-on software for a system manager such as SAP Solution Manager.

### BACKGROUND

SAP Solution Manager is a software platform developed by the company SAP AG to manage the lifecycle of SAP and related systems, components and platforms. It is one of several available system managers for managing and monitoring suites of software applications. SAP Solution Manager and similar system managers include diagnostics and monitoring applications, a configuration validation unit, and monitoring and alerting infrastructure. They also include a configuration and change database and a business warehouse to store data extracted from monitored or managed systems through an extractor framework. The business warehouse includes information providers (i.e. infoproviders) such as InfoCubes and InfoObjects to load and display data views. The business warehouse also includes data transfer processes and process chains to transfer data between infoproviders. The dashboard builder in SAP Solution Manager supports monitoring for standard and custom key performance indicators through data visualizations. The guided procedures framework in SAP Solution Manager is used to develop and apply procedures for alert and error investigation.

SAP Solution Manager includes applications and infrastructure to support security monitoring including detection of security events, threats and vulnerabilities in SAP systems, and supporting components and platforms that could expose such systems to internal and external threats. However, the applications and infrastructure in SAP Solution Manager and similar system managers lack the required security-relevant content to perform comprehensive security monitoring. Thus, there is a need for add-on software such as security policies and rule sets, business warehouse infoproviders, configuration stores, data transfer processes and process chains, report templates, data collectors, monitoring alerts, metrics and scripts, and guided procedures that can support the effective discovery, investigation and remediation of security events, threats and vulnerabilities in monitored systems (e.g. SAP systems), and also supporting components and platforms using SAP Solution Manager or a similar system manager.

### SUMMARY

The principal object of the embodiments herein is to provide a system and method for add-on software required for a system manager to manage and respond to security events, threats and vulnerabilities in monitored systems and supporting components and platforms.

Another object of the embodiments herein is to provide a system and method for detecting, reporting, investigating, and removing security vulnerabilities and threats in monitored systems.

According to an aspect of the present invention, there is provided a method for managing security vulnerabilities and threats in at least one monitored system monitored and managed by a system manager. In a related aspect, the present invention provides a method for managing security vulnerabilities and threats in at least one monitored system using SAP Solution Manager. The method includes storing security-related data, by at least one Business Warehouse data provider and query, wherein the security-related data corresponds to at least one of system data, user data and event data associated with the at least one monitored system; reading, by at least one custom program, function module or at least one operating system script, configured in the at least one monitored system and the system manager, the event data, threat data and vulnerability data, and loading at least one of the event data, the threat data and the vulnerability data to at least one custom data table for storage.

According to the same aspect, the method further includes monitoring, security events, threats and vulnerabilities in the at least one monitored system, by at least one custom monitoring template containing custom metrics, metric groups and alerts that are used by a monitoring and alerting infrastructure and at least one custom data collector, data provider and operating system script; extracting security related data from the at least one monitored system, by a configuration and change database extractor customization unit; and customizing, by a configuration store customization unit, a plurality of settings for security relevant configuration stores in a configuration and change database.

According to the same aspect, the method further includes performing, by at least one custom target system, security checks for the at least one monitored system, wherein the security checks are performed by analyzing the security related data stored in at least one configuration and change database using configuration validation unit; monitoring and visualizing, by at least one custom security key performance indicator in a Dashboard Builder, a security related alert, a security related patch, vulnerability data, and threat data for the at least one monitored system using the at least one business warehouse data provider and query; and investigating and managing security-related alerts in the system manager using at least one custom guided procedure in a guided procedure framework. The at least one custom guided procedure includes operating procedures, wherein the operating procedures comprise manual or automatic activities for investigating and managing security alerts.

According to the same aspect, the system data includes system identifier data, system reference data, and job processing data; the user data comprises data related to user profile, user types, user changes, and user roles; and the event data comprises event fields and data elements from one or more log files.

According to the same aspect, the security related alert comprises of security events and threats logged in the one or more log files and the at least one custom data tables that are triggered by the monitoring and alerting infrastructure based on the custom metrics contained in the at least one custom monitoring template and the data collectors; the security related patch comprises of data related to unapplied security patches for the at least one monitored system including patch reference numbers or identifiers, release dates, priorities, implementation statuses, related software components, and short texts or descriptions; the vulnerability data comprises of data related to security vulnerabilities in the at least one monitored system detected by the configuration validation unit based on the at least one custom target system and the monitoring and alerting infrastructure that uses the at least one custom monitoring template containing the custom metrics; and the threat data comprises of data related to security threats logged in the one or more log files and the at least one custom data tables that are monitored by the monitoring and alerting infrastructure based on the custom metrics contained in the at least one custom monitoring template and the data collectors.

According to the same aspect, the method further includes performing an action, by at least one custom program and function module or operating system script, wherein the action including at least one of: loading the system data, the vulnerability data and the threat data for the at least one monitored system from the at least one business warehouse data provider and query to the at least one custom table, and the event data from the one or more log files in the at least one monitored system, to the at least one custom table, and reading the system data, the vulnerability data and the threat data in the custom tables using at least one custom data collector, provider and operating system script.

According to the same aspect, the method further includes monitoring security events, threats or vulnerabilities in the at least one monitored system using the at least one custom data collector, data provider and operating system script, by at least one custom monitoring template containing custom metrics, metric groups and alerts that are used by a monitoring and alerting infrastructure.

According to another aspect of the present invention there is provided a system for managing security vulnerabilities and threats in at least one monitored system monitored by a system manager in the form of add-on software for the system manager. In a related aspect, the present invention provides a system for managing security vulnerabilities and threats in at least one monitored system in the form of add-on software for SAP Solution Manager. The system includes at least one business warehouse data provider and query configured to at least one store security-related data, load the security-related data, and transfer the security-related data from the at least one monitored system, wherein the security-related data comprising at least one of system data, user data and event data; a configuration and change database extractor customization unit that extracts the security-related data from the at least one monitored system; a configuration store customization unit configured to customize a plurality of settings for security relevant configuration stores in a configuration and change database, and at least one custom configuration store for the configuration and change database to store security-related data from the at least one monitored system.

According to the same aspect, the system further includes at least one custom target system configured to perform security checks for the at least one monitored system, wherein the security checks are performed by analyzing the security related data stored in the at least one configuration store in the configuration and change database using a configuration validation unit; at least one custom key performance indicator for a dashboard builder configured to at least one of: monitor and visualize a security related alert, a security related patch, vulnerability data, and threat data for the at least one monitored system from the at least one business warehouse data provider and query; and at least one custom reporting unit that connects to the business warehouse data provider and query in the system manager to convey security vulnerability, patching and alert data for at least one monitored system;

According to the same aspect, the system further includes at least one custom program and function module or at least one operating system script, configured in the at least one monitored system, and the system manager, to read the event data, the threat data and the vulnerability data associated with the at least one monitored system, and load at least one of the event data, the threat data, and the vulnerability data to at least one custom data table for storage; at least one custom data collector, data provider and operating system script configured to at least one of: collect, aggregate, count, and summarize configuration compliance dimensions for the at least one monitored system; east one custom monitoring template containing custom metrics, metric groups and alerts that are used by a monitoring and alerting infrastructure to monitor security events, threats or vulnerabilities in the at least one monitored system using the at least one custom data collector, data provider and operating system script; and at least one custom guided procedure for a guided procedures framework comprising operating procedures, wherein the operating procedures include manual or automated activities for investigating and managing the security alerts.

Unlike conventional systems and methods, the proposed system and method is used to introduce or customize configuration and change database store content, extractors, target systems, programs and function modules, data collectors, providers and scripts, custom reports, key performance indicators, tables, configuration stores, monitoring metrics, alerts and templates, and guided procedures that, taken together, are intended to discover and mitigate security events, threats and vulnerabilities in monitored systems, components and platforms.

The system or method of the present invention may be used in at least one of: existing and future versions and releases of SAP Solution Manager, re-labelled SAP Solution Manager platforms commercially available from SAP SE, derivations of SAP Solution Manager, wherein the derivations of SAP Solution Manager include, but are not limited to, SAP Focused Run, and replacements released by SAP SE for SAP Solution Manager.

These and other features and advantages of the exemplary embodiments will be apparent from the description provided herein.

### BRIEF DESCRIPTION OF FIGURES

Purposes and advantages of the exemplary embodiments will be apparent to those of ordinary skill in the art from the following detailed description in conjunction with the appended drawings in which like reference characters are used to indicate like elements, and in which:
**FIG. 1** illustrates a system for managing security events, threats and vulnerabilities, according to an embodiment disclosed herein;
**FIG. 2** is a flow chart illustrating a method for managing security events, threats and vulnerabilities, according to an embodiment disclosed herein; and
**FIG. 3** illustrates a computing environment implementing the method for managing security events, threats and vulnerabilities, according to embodiments disclosed herein.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes, which may be substantially represented in computer readable medium and executed by a computer or processor, whether such computer or processor is explicitly shown.

### DETAILED DESCRIPTION OF INVENTION

Various embodiments of the present disclosure will now be described in detail with reference to the accompanying drawings. In the following description, specific details such as detailed configuration and components are merely provided to assist the overall understanding of embodiments of the present disclosure. Therefore, it should be apparent to those skilled in the art that various changes and modifications of the embodiments described herein can be made without departing from the scope and spirit of the present disclosure. In addition, descriptions of well-known functions and constructions are omitted for clarity and conciseness.

Some embodiments, illustrating its features, will now be discussed in detail below in conjunction with the accompanying figures. The words "comprising," "having,", "comprises of,", "containing," and "including," and other forms thereof, are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. It must also be noted that as used herein the term "or equivalent", refers to any equivalent module or components that essentially perform the intended function.

The proposed disclosure is provided to explain in an enabling fashion the best modes of performing one or more embodiments. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued. It is noted that some embodiments may include a plurality of processes or method steps, which can be performed in any order, unless expressly and necessarily limited to a particular order; i.e., processes or steps that are not so limited may be performed in any order.

As is traditional in the field, embodiments may be described and illustrated in terms of blocks, which carry out a described function or functions. These blocks, which may be referred to herein as units or modules or the like, may be implemented by analog and/or digital circuits such as logic gates, integrated circuits, microprocessors, microcontrollers, memory circuits, passive electronic components, active electronic components, optical components, hardwired circuits and the like, and may optionally be driven by firmware and/or software instructions.

The claims may use the following terms, which are defined to have the following meanings for the purpose of the claims and detailed description provided herein. Other definitions may be specified in this document.

The term add-on or add-on software as used herein in the disclosure refers to a software extension that extends the features and capabilities of a program or platform. It may add features or capabilities that are not available in the standard, default installation of a program or platform or modify the user interface, and thereby provide additional capabilities.

SAP Solution Manager is a well-known system manager and preferred embodiments of the present invention are intended to be used specifically with SAP Solution Manager. Terms commonly used in connection with SAP Solution Manager are therefore used herein but other system managers offer equivalent systems and/or features performing equivalent functions.

The term "monitored systems or managed systems" as used herein refers to systems, platforms and components connected to SAP Solution Manager or other system manager.

The term "guided procedures framework or equivalent" in SAP Solution Manager is used to develop and apply procedures for alert and error investigation.

The terms "configuration and change database or equivalent" and "business warehouse data providers and queries" in SAP Solution Manager is meant to store data extracted from monitored or managed systems through an extractor framework.

The term "dashboard builder or equivalent" present in SAP Solution Manager supports monitoring of standard and custom key performance indicators through data visualizations.

The term "tables" or "data tables" in the SAP Solution Manager are used to store events, threats and vulnerabilities data associated with monitored or managed systems.

The term "configuration validation unit or equivalent" in SAP Solution Manager perform security checks for monitored or managed systems by analyzing data stored in relevant configuration and change database configuration stores.

The term "monitoring and alerting infrastructure or equivalent" in SAP Solution Manager performs security checks in connected components, platforms, and systems such as, but not limited to, databases and operating systems.

The terms "extractor framework or equivalent" in SAP Solution Manager is used for extracting security-related data from the monitored systems.

The designation "XML" or "Extensible Markup Language" refers to mark-up languages, variations and extensions thereof.

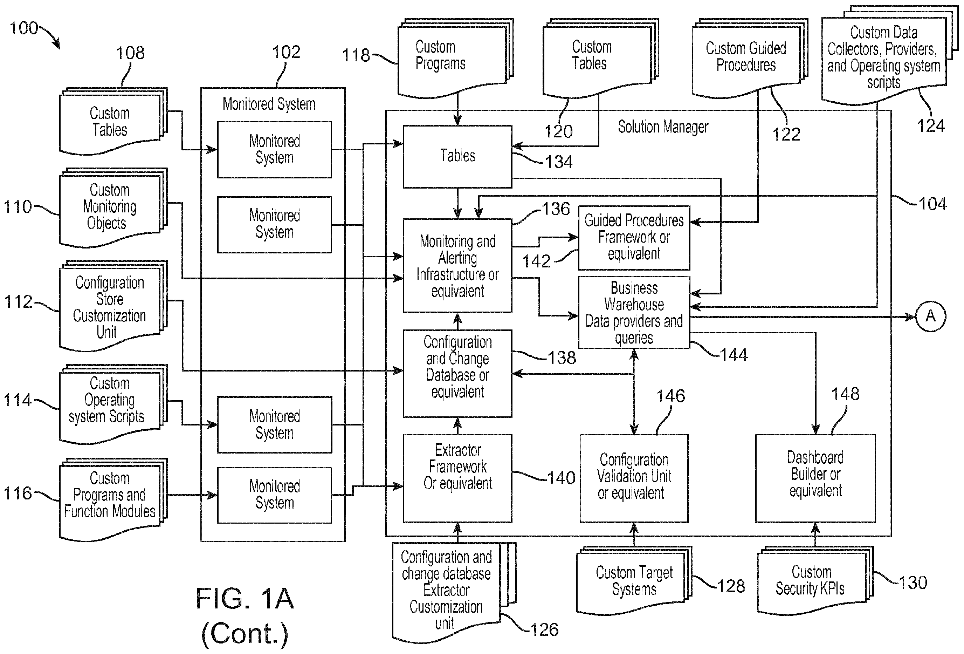

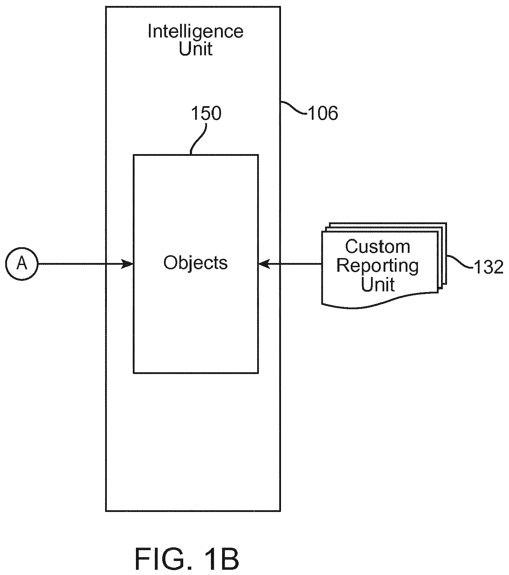

Accordingly, the embodiments herein provide a method for managing security vulnerabilities and threats in at least one monitored system using a SAP Solution Manager. Referring now to the drawings, and more particularly to **FIG. 1** through **3****,** where similar reference characters/numeral denotes corresponding features consistently throughout the figures.

**Reference numbers:**

| **Reference Number** | **Description** |
|---|---|
| 100 | system for managing security threats, events and vulnerabilities |
| 102 | monitored systems or managed systems |
| 104 | SAP Solution Manager |
| 106 | intelligence unit |
| 108 | custom tables or custom data tables |
| 110 | custom monitoring objects |
| 112 | configuration store customization unit |
| 114 | custom operating system scripts |
| 116 | custom programs and function modules |
| 118 | custom programs |
| 120 | custom tables or Custom data tables |
| 122 | custom guided procedures |
| 124 | custom data collectors, providers and operating system scripts |
| 126 | configuration and change database extractor customization unit |
| 128 | custom Target systems |
| 130 | custom Security key performance indicators |
| 132 | custom reporting unit |
| 134 | tables or data tables |
| 136 | monitoring and alerting infrastructure or equivalent |
| 138 | configuration and change database or equivalent |
| 140 | extractor framework or equivalent |
| 142 | guided procedures framework or equivalent |
| 144 | business warehouse data providers and queries |
| 146 | configuration validation unit or equivalent |
| 148 | dashboard builder or equivalent |
| 150 | reporting objects |

Referring to **FIG. 1****,** illustrates a system **100** for managing security threats, events, and vulnerabilities, according to an embodiment disclosed herein. In an embodiment, the system **100** includes a plurality of monitored or managed systems, a SAP Solution Manager **104,** an intelligence unit **106,** custom tables **108,** custom monitoring objects **110,** configuration store customization unit **112,** custom operating system scripts **114,** custom programs and function modules **116,** custom programs **118,** custom tables **120,** custom guided procedures **122,** custom data collectors, providers and operating system scripts **124,** a configuration and change database extractor customization unit **126,** target systems **128,** security key performance indicators **130,** and custom reporting unit **132.**

As seen, SAP Solution Manager **104** includes tables **134,** a monitoring and alerting infrastructure or equivalent **136,** a configuration and change database **138,** an extractor framework or equivalent **140,** a guided procedures framework or equivalents **142,** a business warehouse data providers and queries **144,** a configuration validation unit **146,** and a dashboard builder **148.** The intelligence unit **106** includes reporting objects **150.**

As seen in the **FIG. 1****,** the tables **134,** in the monitored systems **102** store event data, threat data, and vulnerability data. The custom tables or custom data tables **108** are configured to store system identifiers, system references, and job processing data in SAP Solution Manager **104.** Further, the custom tables **108** also store event fields and data elements from log files and the tables **134** in the monitored systems **102.**

Further, the custom programs and function modules **116,** installed in the monitored systems **102** and the SAP Solution Manager **104** or any other similar host are configured to read event data in the log files and the tables **134,** and load the event data, the threat data, and the vulnerability data to the custom tables or custom data tables **120.** Further, the custom programs and function modules **116** are configured to automatically and periodically purge alert, system data, the vulnerability data, and the threat data associated with the monitored systems **102,** collected by the SAP Solution Manager **104** from custom and standard information providers and load the same to the custom tables **108.** Further, the custom programs and function modules **116** are configured to maintain blacklisted transaction codes, programs, function modules and URLs, and white listed users and clients for logging purposes. Further, the custom programs and function modules **116** are configured to load the event data from the log files and the tables or data tables **134** in the monitored systems **102** to the custom tables **108.** Further, the custom programs and FMs **116** are configured to read data in the custom tables **108** and standard data tables **134** using the custom data collectors, providers and scripts **124.**

According to the embodiment, the custom monitoring objects **110** include operating system scripts **114** that are called by the monitoring and alerting infrastructure or equivalent **136** to perform security checks in connected components, platforms, and systems such as, but not limited to, databases and operating systems. The monitoring objects **110** also include custom monitoring templates for SAP and non-SAP systems, components and platforms that contain custom security-related metrics, metric groups, alerts that are periodically checked by the custom and standard data collectors, providers and scripts **124** using the monitoring and alerting infrastructure or equivalent **136** against the monitored systems **102.**

According to the embodiment, the configuration and change database extractor customization unit **126** customizes methods within the configuration and change database **138** and the extractor framework and equivalents **140** to extract security-related data or details from the monitored systems **102** that is not extracted by standard delivered methods and extractors. The security related data received from the monitored systems **102** correspond to at least one of the system data, user data, and event data. According to various embodiments, the system data preferably includes system identifier data, system reference data, and job processing data. Similarly, the user data preferably includes data related to user profile, user types, user changes, and user roles. Likewise, the event data comprises event fields and data elements from log files.

Further, according to the embodiment, the conf**igu**ration store customization unit **112** is configured to customize settings for security-relevant configuration stores in the configuration and change database or equivalent **138** of SAP Solution Manager **104.** The customized settings define the scope of the data collected for the related configuration and change database stores, including authorization objects and values, tables, transactions, user types, user changes, user roles, and user profiles. The target or custom target systems **128** (also known as reference systems) are used by the configuration validation unit **146,** to perform security checks for monitored systems **102,** by analyzing the data stored in relevant configuration and change database **138** configuration stores. Specifically, the target systems **128** include operators, patterns, target values, and value ranges for security data available for the monitored systems **102,** in standard and custom property, text, table, and XML configuration stores of the configuration and change database or equivalent **138.** The coverage of the target systems **128** includes, but is not limited to, the areas below by SAP system type or platform.
- ABAP systems
   ∘ Security parameters
      ▪ The security parameters include parameters related to remote access, Remote Function Calls, HTTP error handling and responses, trace levels, Secure Network Communications, Transport Layer Security, Single Sign-On, unified connectivity, RFC callbacks, metadata exchange, authority checks, auditing and logging, session management, password policies, password hash algorithms, and client security settings.
   ∘ Client settings
   ∘ System change settings
   ∘ Gateway security filters
   ∘ RFC destinations
   ∘ Internet Communication Framework (ICF) services
   ∘ Standard users
   ∘ Password policies
   ∘ User types
   ∘ User profiles
   ∘ User roles
   ∘ User transactions
   ∘ User authorizations
   ∘ User password hash usage
   ∘ Security Audit Log filter settings
   ∘ Patch levels including software releases, SP levels and unapplied Security Notes
- Java Systems:
   ∘ Java services
   ∘ UME security settings
   ∘ Security Audit Log settings
   ∘ Java user permissions
   ∘ Expiring certificates
- SAP HANA Systems by SAP SE:
   ∘ SAP HANA parameters
   ∘ Public users including the SYSTEM user
   ∘ SAP HANA user privileges
- Database Systems:
   ∘ Database parameters
   ∘ User privileges
   ∘ Patch levels
   ∘ Audit settings
   ∘ Audit, change and event logs
- Operating Systems:
   ∘ Operating system parameters
   ∘ User privileges
   ∘ Patch levels
   ∘ Audit settings
   ∘ Audit, change and event logs

Further, the custom security key performance indicators **130** are configured to use or support the dashboard builder or equivalent **148** to monitor and visualize security related alert data, patch data, the vulnerability data, and the threat data for the monitored systems **102,** from the business warehouse data providers and queries **144.** The custom guided procedures **122** are used for investigating and resolving security alerts using the guided procedure framework or equivalent **142.** The custom guided procedures **122** include standard operating procedures including activities for investigating and managing security alerts. In an embodiment, the activities include automated and manual procedures and reference documentation with screen captures for activity steps.

According to various embodiments, the security related alert preferably includes security events and threats logged in the log files and the custom data tables 108 that are triggered by the monitoring and alerting infrastructure **136** based on the custom metrics contained in the custom monitoring template and the data collectors. Further, the security related patch or the patch data preferably includes of data related to unapplied security patches for the monitored systems **102** including patch reference numbers or identifiers, release dates, priorities, implementation statuses, related software components, and short texts or descriptions.

Likewise, the vulnerability data preferably include data related to security vulnerabilities in the monitored systems **102** detected by the configuration validation unit **146** based on the custom target systems **128** and the monitoring and alerting infrastructure **136** that uses custom monitoring template containing the custom metrics. Further, the threat data includes data related to security threats logged in the log files and the custom data tables **108** that are monitored by the Monitoring and alerting infrastructure **136** based on the custom metrics contained in the custom monitoring template and the data collectors.

Further, according to the embodiment, the custom data collectors, providers and scripts **124** makes use of the monitoring and alerting infrastructure **136** to monitor the contents of the data tables **134.** The business warehouse data providers and queries **144** include custom information objects (or "infoObjects"), information cubes (or "InfoCubes"), data transformation processes, data transfer processes, process chains, and queries to aggregate, count, and summarize the configuration store and compliance dimensions for the monitored systems **102.** The dimensions are transformed from standard InfoCubes to custom InfoCubes in the business warehouse data providers and queries **144** through mapping of source and target information objects. They are transferred between standard and custom InfoCubes using the custom data collectors, providers, scripts **124,** process chains, and queries.

Further, according to the embodiment, the custom reporting unit **132** connects to relevant data providers in the business warehouse **144** using standard and custom queries, to convey security vulnerabilities, patching data and alert data for the monitored systems **102.** The custom reporting unit **132** includes, but is not limited to, disclosure of actual and target values, risk ratings, and compliance scorecards for compliance frameworks.

Unlike conventional systems and methods, the present invention relates to add-on software integrated into and used by applications in SAP Solution Manager **104** to support security monitoring for the monitored systems **102,** including but not limited to, vulnerability and threat detection. The present invention delivers advanced protection against security threats using add-on software for diagnostics and monitoring applications within the monitored systems **102** and the SAP Solution Manager **104.** The present invention is used to lower the cost, implementation timeframe and maintenance expenses associated with various cyber defense tools provided by third party vendors thereby enabling corporations to secure business-critical systems without purchasing and installing additional third-party security software. SAP Solution Manager **104** provides a platform for monitoring the SAP and the non-SAP systems, collectively called monitored systems **102.** However, the platform itself cannot perform advanced security monitoring for the monitored systems **102** since there is insufficient security content available in the default, standard installation of SAP Solution Manager **104.** Therefore, the present invention provides an improvement on the standard delivery of SAP Solution Manager **104,** thereby, making it possible, amongst other things and not limited to, utilize SAP Solution Manager **104** to automatically discover and manage security events, threats and vulnerabilities in the monitored systems **102.**

The **FIG. 1** as illustrated and described above shows a limited overview of the system **100** but it is to be understood that another embodiment is not limited thereto. Further, the system **100** can include different units coupled to each other.

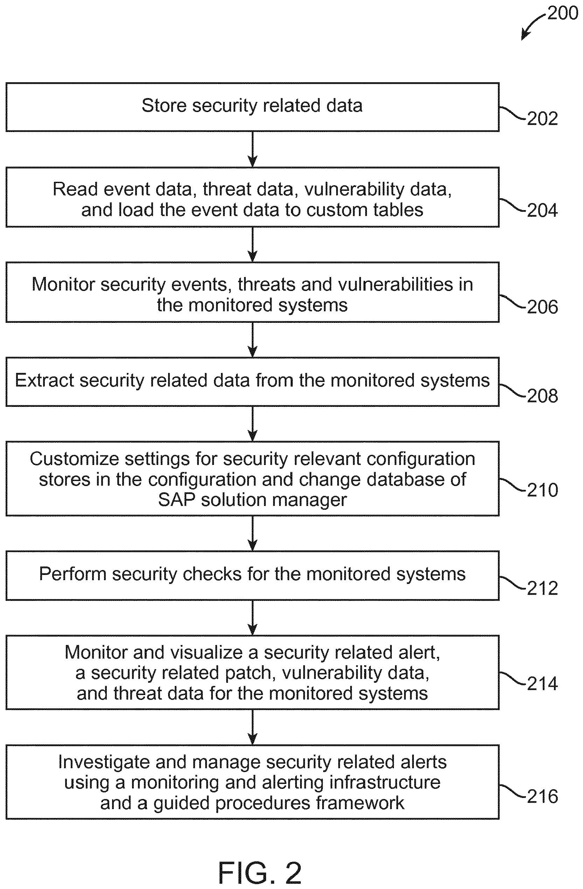

Referring to **FIG. 2** is a flow chart **200** illustrating a method for managing security events, threats and vulnerabilities, according to an embodiment as disclosed herein.

At step **202,** the method includes storing of security-related data. The method allows business warehouse data provider and query **144** to store the security-related data in custom tables **108.** The security-related data corresponds to at least one of system data, user data and event data associated with the at least one monitored system. In an embodiment, the system data includes system identifiers data, system references data, and job processing data, where the system data is stored in SAP Solution Manager **104.** In an embodiment, the event data includes event fields and data elements from log files, where the event data is stored in monitored systems **102.**

At step **204,** the method includes reading event data, threat data, and vulnerability data and loading the event data to the custom tables **108** for storage. The method allows custom program and function modules **116** or at least one operating system scripts **114** configured in the monitored systems **102** and SAP Solution Manager **104,** to read the event data, the threat data, and the vulnerability data and load the event data to the custom tables **108** for storage.

At step **206,** the method includes monitoring security events, threats and vulnerabilities in the monitored systems **102** by custom monitoring template containing custom metrics, metric groups and alerts that are used by a monitoring and alerting infrastructure **136** and custom data collector, data provider and operating system scripts **124.**

At step **208,** the method includes extracting the security related data from the monitored systems **102** using customized extractors and custom configuration stores in the configuration and change database or equivalent **138.** The method allows the configuration and change database extractor customization unit **126** to extract security related data from monitored systems **102** through the extractor framework or equivalent in the SAP Solution Manager **104.**

At step **210,** the method includes customizing a plurality of settings for the security relevant configuration stores in the configuration and change database or equivalent **138** of the SAP Solution Manager. The method allows configuration store customization unit **112** to customize the configuration of extracted data including, but not limited to, user-related authorizations, profiles, transactions and types.

At step **212,** the method includes a step of performing security checks for the monitored systems **102.** The method allows the custom target systems **128** to perform security checks for monitored systems **102.** In an embodiment, the security check is performed by analyzing the data stored in configuration and change database configuration stores or equivalent using configuration validation unit or equivalent **146.**

At step **214,** the method includes monitoring and visualizing a security related alert, a security related patch, vulnerability data, and threat data for monitored systems **102** from business warehouse data providers and queries **144** using custom key performance indicators **130** for the dashboard builder or equivalent **148.**

According to various embodiments, the security related alert comprises of security events and threats logged in the log files and the custom data tables **108** that are triggered by the monitoring and alerting infrastructure **136** based on the custom metrics contained in the custom monitoring template and the data collectors. Further, the security related patch or the patch data preferably includes of data related to unapplied security patches for the monitored systems **102** including patch reference numbers or identifiers, release dates, priorities, implementation statuses, related software components, and short texts or descriptions.

Likewise, the vulnerability data includes data related to security vulnerabilities in monitored systems **102** detected by the configuration validation unit **146** based on the custom target systems **128** and detected by the monitoring and alerting infrastructure **136** using custom monitoring templates containing custom metrics. Further, the threat data includes data related to security threats logged in log files and custom data tables **108** that are monitored by the monitoring and alerting infrastructure **136** using data collectors based on custom metrics contained in custom monitoring templates.

At step **216,** the method includes investigating and managing security related alerts in the SAP Solution Manager using custom guided procedures for the **122** guided procedure framework or equivalent **142.** The custom guided procedures **122** comprise operating procedures, wherein the operating procedures comprise manual or automatic activities for investigating and managing security alerts.

The method further includes aggregating, counting, and summarizing configuration and compliance dimensions for monitored systems **102,** and conveying security vulnerability, patching and alert data for the monitored systems **102** using at least one custom reporting unit that connects to data providers and queries in SAP Solution Manager **104.**

The various actions, acts, blocks, steps, or the like in the flow chart **200** may be performed in the order presented, in a different order or simultaneously. Further, in some embodiments, some of the actions, acts, blocks, steps, or the like may be omitted, added, modified, skipped, or the like without departing from the scope of the invention.

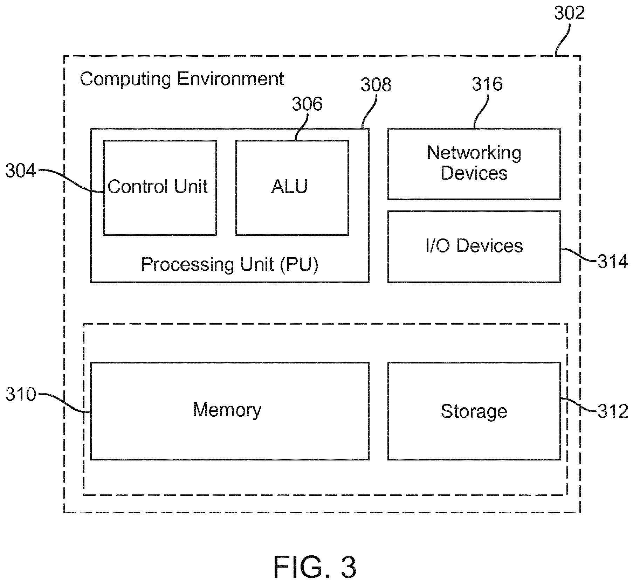

Referring to **FIG. 3** illustrates a computing environment implementing the method for managing the security events, threats and vulnerabilities, according to embodiments disclosed herein. Examples of computing environment may include computer, servers, laptops, mobiles and so on. As depicted in the figure, the computing environment **302** comprises at least one processing unit **308** that is equipped with a control unit **304** and an Arithmetic Logic Unit (ALU) **306,** a memory 310, a storage unit **312,** plurality of networking devices 316 and a plurality Input output (I/O) devices **314.** The processing unit **308** is responsible for processing the instructions of the technique. The processing unit **308** receives commands from the control unit in order to perform its processing. Further, any logical and arithmetic operations involved in the execution of the instructions are computed with the help of the ALU **306.**

The overall computing environment **302** can be composed of multiple homogeneous and/or heterogeneous cores, multiple CPUs of different kinds, special media and other accelerators. The processing unit **308** is responsible for processing the instructions of the technique. Further, the plurality of processing units **308** may be located on a single chip or over multiple chips.

The technique comprising of instructions and codes required for the implementation are stored in either the memory unit **310** or the storage **312** or both. At the time of execution, the instructions may be fetched from the corresponding memory **310** or storage **312,** and executed by the processing unit **308.**

In case of any hardware implementations, various networking devices **316** or external I/O devices **314** may be connected to the computing environment to support the implementation through the networking unit and the I/O device unit.

The embodiments disclosed herein can be implemented through at least one software program running on at least one hardware device and performing network management functions to control the elements. The elements shown in the **FIGS. 1** through **3** include blocks which can be at least one of a hardware device, or a combination of hardware device and software units.

The foregoing description of the specific embodiments will so fully reveal the general nature of the embodiments herein that others can, by applying current knowledge, readily modify or adapt such specific embodiments for various applications. Such adaptations and modifications should and are intended to be comprehended within the meaning and range of equivalents of the disclosed embodiments. In particular, a suitably skilled person will be able to adapt the present invention to work with system managers other than SAP Solution Manager. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for managing security vulnerabilities and threats in at least one monitored system monitored by a system manager, the method comprising:
storing security-related data, by at least one business warehouse data provider and query, wherein the security-related data corresponds to at least one of system data, user data and event data associated with the at least one monitored system;
reading, by at least one custom program, function module or at least one operating system script, configured in the at least one monitored system and system manager, the event data, threat data and vulnerability data, and loading at least one of the event data, the threat data and the vulnerability data to at least one custom data table for storage;
monitoring security events, threats and vulnerabilities in the at least one monitored system, by at least one custom monitoring template containing custom metrics, metric groups and alerts that are used by a monitoring and alerting infrastructure and at least one custom data collector, data provider and operating system script;
extracting security related data from the at least one monitored system, by a configuration and change database extractor customization unit;
customizing, by a configuration store customization unit, a plurality of settings for security relevant configuration stores in a configuration and change database;
performing, by at least one custom target system, security checks for the at least one monitored system, wherein the security checks are performed by analyzing the security related data stored in at least one configuration and change database using configuration validation unit;
monitoring and visualizing, by at least one custom security key performance indicator in a dashboard builder, a security related alert, a security related patch, vulnerability data, and threat data for the at least one monitored system using the at least one business warehouse data provider and query; and
investigating and managing security-related alerts in the system manager using at least one custom guided procedure in a guided procedure framework.

2. The method of claim 1, wherein the system data comprises system identifier data, system reference data, and job processing data.

3. The method of claim 1 or claim 2, wherein the user data comprises data related to user profiles, user types, user changes, and user roles.

4. The method of any of claims 1 to 3, wherein the event data comprises event fields and data elements from one or more log files.

5. The method of any of claims 1 to 4, wherein the security related alert comprises of security events and threats logged in the one or more log files and the at least one custom data tables that are triggered by the monitoring and alerting infrastructure using data collectors based on custom metrics contained in at least one custom monitoring template.

6. The method of any of claims 1 to 5, wherein the security related patch comprises of data related to unapplied security patches for the at least one monitored system including patch reference numbers or identifiers, release dates, priorities, implementation statuses, related software components, and short texts or descriptions.

7. The method of any of claims 1 to 6, wherein the vulnerability data comprises of data related to security vulnerabilities in the at least one monitored system detected by the configuration validation unit based on the at least one custom target system and the monitoring and alerting infrastructure that uses the at least one custom monitoring template containing the custom metrics.

8. The method of any of claims 1 to 7, wherein the threat data comprises of data related to security threats logged in the one or more log files and the at least one custom data tables that are monitored by the monitoring and alerting infrastructure using the data collectors based on the custom metrics contained in the at least one custom monitoring template.

9. The method of any of claims 1 to 8, further comprising performing an action, by at least one custom program and function module or operating system script, wherein the action including at least one of: loading the system data, the vulnerability data and the threat data for the at least one monitored system from the at least one business warehouse data provider and query to the at least one custom table, and the event data from the one or more log files in the at least one monitored system, to the at least one custom table, and reading the system data, the vulnerability data and the threat data in the custom tables using at least one custom data collector, provider and operating system script.

10. The method of any of claims 1 to 9, further comprising monitoring security events, threats or vulnerabilities in the at least one monitored system using the at least one custom data collector, data provider and operating system script, by at least one custom monitoring template containing custom metrics, metric groups and alerts that are used by a monitoring and alerting infrastructure.

11. The method of any of claims 1 to 10, wherein the at least one custom guided procedure comprises operating procedures, wherein the operating procedures comprise manual or automatic activities for investigating and managing security alerts.

12. The method of any of claims 1 to 11, wherein the method further comprises aggregating, counting, and summarizing configuration and compliance dimensions for the at least one monitored system.

13. The method of any of claims 1 to 12, wherein the method further comprising conveying security vulnerability, patching and alert data for the at least one monitored system using at least one custom reporting unit that connects to the data provider and query in the system manager.

14. The method of any of claims 1 to 13, wherein the system manager is SAP Solution Manager.

15. A system for managing security vulnerabilities and threats in at least one monitored system monitored by a system manager, the system in the form of add-on software for the system manager and comprising:
at least one business warehouse data provider and query configured to at least one store security-related data, load the security-related data, and transfer the security-related data from the at least one monitored system, wherein the security-related data comprising at least one of system data, user data and event data;
a configuration and change database extractor customization unit that extracts security- related data from the at least one monitored system;
a configuration store customization unit configured to customize a plurality of settings for security relevant configuration stores in a configuration and change database;
at least one custom configuration store for the configuration and change database to store security-related data from the at least one monitored system;
at least one custom target system configured to perform security checks for the at least one monitored system, wherein the security checks are performed by analyzing the security related data stored in the at least one configuration store in the configuration and change database using a configuration validation unit;
at least one custom key performance indicator for a dashboard builder configured to at least one of: monitor and visualize a security related alert, a security related patch, vulnerability data, and threat data for the at least one monitored system from the at least one business warehouse data provider and query;
at least one custom reporting unit that connects to the business warehouse data provider and query in the system manager to convey security vulnerability, patching and alert data for at least one monitored system;
at least one custom program and function module or at least one operating system script, configured in the at least one monitored system, and the system manager, to read the event data, the threat data and the vulnerability data associated with the at least one monitored system, and load at least one of the event data, the threat data, and the vulnerability data to at least one custom data table for storage;
at least one custom data collector, data provider and operating system script configured to at least one of: collect, aggregate, count, and summarize configuration compliance dimensions for the at least one monitored system;
at least one custom monitoring template containing custom metrics, metric groups and alerts that are used by a monitoring and alerting infrastructure to monitor security events, threats or vulnerabilities in the at least one monitored system using the at least one custom data collector, data provider and operating system script; and
at least one custom guided procedure for a guided procedures framework comprising operating procedures, wherein the operating procedures include manual or automated activities for investigating and managing the security alerts.
